# EUROPEAN PATENT APPLICATION

(11) **EP 4 472 144 A1**
(43) Date of publication of application: **04.12.2024**
(21) Application number: 23777963.2
(22) Date of filing: 22.03.2023
(51) Int. Cl.: H04L 12/28

(54) **DEVICE LOGIN METHOD, ELECTRONIC DEVICE AND SYSTEM**

(30) Priority: 28.03.2022 CN 202210316423
(71) Applicant: Huawei Technologies Co., Ltd., Shenzhen, Guangdong 518129 (CN)
(72) Inventor: LU, Haidong, Shenzhen, Guangdong 518129 (CN)
(74) Representative: Goddar, Heinz J.
(86) International application number: PCT/CN2023/083134
(87) International publication number: WO 2023/185593

(57) **Abstract**

This application provides a device login method, an electronic device, and a system, and relates to the field of terminal technologies. In technical solutions of this application, a first device may log in to a third device via a second device configured with a display, reducing user operation difficulty and improving user experience. The method includes: The first device forwards, to the second device, registration information sent by the third device. The second device registers with the third device based on the registration information, and the third device sends login information to the second device after the registration is completed. The first device scans a QR code that is displayed on the second device and associated with the login information of the third device, to log in to the third device.

## Description

This application claims priority to Chinese Patent Application No. 202210316423.9, filed with the China National Intellectual Property Administration on March 28, 2022 and entitled "DEVICE LOGIN METHOD, ELECTRONIC DEVICE, AND SYSTEM", which is incorporated herein by reference in its entirety.

### TECHNICAL FIELD

Embodiments of this application relate to the field of terminal technologies, and in particular, to a device login method, an electronic device, and a system.

### BACKGROUND

With development of terminal technologies, a user has more electronic devices. For example, in a home scenario, various devices (such as an audio/video device, a lighting system device, and an environment control device) at home are connected together by using an internet of things technology to form a smart home system, and provide the user with a plurality of functions such as home appliance control and lighting control. The smart home system includes devices such as a full-house smart host, a full-house smart light host, and a router, and may be used as a home hub. After the user logs in to the home hub via an electronic device (for example, a mobile phone), the user can perform configuration and commissioning on the device in the smart home system.

The full-house smart host is configured with a display. The user can log in to the full-house smart host by scanning a QR code displayed on the full-house smart host via the electronic device. However, as a service requirement changes, the home hub may be a device that is not configured with a display, for example, a full-house smart light host or a router. When the user logs in to such a device via the electronic device, the user needs to enter a device address, and operation difficulty is high. In addition, if the smart home system includes a plurality of devices that can be logged in to, it is difficult for the user to determine a device to log in to for device configuration and commissioning.

### SUMMARY

To resolve the foregoing technical problem, embodiments of this application provide a device login method, an electronic device, and a system. In technical solutions provided in embodiments of this application, a first device may log in to a third device as a home hub via a second device configured with a display, reducing user operation difficulty and improving user experience.

To achieve the foregoing technical objective, embodiments of this application provide the following technical solutions.

According to a first aspect, a device login method is provided, and is applied to a third device. The method includes: receiving a registration request sent by a second device, where the registration request carries registration information, and the registration information is registration information allocated by the third device; and sending login information to the second device after obtaining the registration information, where the login information indicates the second device to generate a QR code associated with the login information, and the QR code is used to assist a first device in logging in to the third device.

In some embodiments, the third device is, for example, a full-house smart light host or a router.

In this way, the third device may allocate the registration information to a second device configured with a display, to establish a trusted connection between the second device and the third device. Subsequently, a user may not need to manually enter an address or manually operate a host button, and the first device may automatically obtain an address of the third device via the second device, to implement login by scanning a code. This reduces user operation difficulty and improves login efficiency.

According to the first aspect, before the receiving a registration request sent by a second device, the method further includes: receiving a first setting command sent by the first device, where the first setting command is used to set the third device as a primary home hub; generating the registration information according to the first setting command; and sending the registration information to the first device.

In some embodiments, the third device may determine a quantity of secondary home hubs (that is, second devices) based on secondary home hub information carried in the first setting command. Then, the third device may allocate a corresponding quantity of registration information to the secondary home hubs based on the quantity of secondary home hubs.

In some embodiments, the third device determines, according to the first setting command, that the third device is used as the primary home hub and needs to be used as an entrance to configure another smart home device. Therefore, the third device allocates the registration information to the second device, to establish a trusted communication connection to the second device, to deliver the login information used to log in to the third device, so that the first device can subsequently log in to the third device by using the login information in the second device. This reduces user operation difficulty.

According to any one of the first aspect or the foregoing implementations of the first aspect, before the receiving a first setting command sent by the first device, the method further includes: negotiating with the first device about a key for data transmission.

In this way, security of data transmission between devices is ensured through key negotiation.

According to any one of the first aspect or the foregoing implementations of the first aspect, before the receiving a registration request sent by a second device, the method further includes: receiving a device information request sent by the first device; and sending a first device information response to the first device, where the first device information response carries a device type and a device capability of the third device.

In some embodiments, an identifier used to identify a device identity is configured in the device capability. The first device may determine, based on the identifier, whether the third device or the second device logs in to the smart home system for the first time, to determine whether a primary home hub or a secondary home hub to which a device identity has been allocated exists in the environment.

If the first device determines that no such device exists in the current smart home system, the first device may be divided into a primary home hub and a secondary home hub based on the device type and the device capability; or the first device displays device information, and determines the primary home hub and the secondary home hub in response to a user operation.

According to any one of the first aspect or the foregoing implementations of the first aspect, the method further includes: sending updated login information to the second device according to a preset periodicity.

In this way, the second device may assist, based on the latest obtained login information, the first device in logging in to the third device. This reduces a risk of abnormal login caused by login information leakage.

According to a second aspect, a device login method is provided, and is applied to a second device. The method includes: receiving registration information sent by a first device, where the registration information includes a first address of a third device; sending, based on the registration information, a registration request to the third device corresponding to the first address, where the registration request carries the registration information; receiving login information sent by the third device; and displaying a QR code associated with the login information, where the QR code is used to assist the first device in logging in to the third device.

In this way, the user does not need to manually enter an address or manually operate a host key, but the first device may scan a QR code that is displayed on a display of the second device and associated with device information of the third device, to automatically obtain the address of the third device, and implement login through scanning. This reduces user operation difficulty and improves login efficiency.

According to the second aspect, the receiving registration information sent by a first device includes: receiving a second setting command sent by the first device, where the second setting command is used to set the second device as a secondary home hub, and the second setting command carries the registration information.

According to any one of the second aspect or the foregoing implementations of the second aspect, before the sending, based on the registration information, a registration request to the third device corresponding to the first address, the method further includes: negotiating with the third device about a key for data transmission.

According to any one of the second aspect or the foregoing implementations of the second aspect, before the receiving registration information sent by a first device, the method further includes: receiving a device information request sent by the first device; and sending a second device information response to the first device, where second device information response carries a device type and a device capability of the second device.

According to any one of the second aspect or the foregoing implementations of the second aspect, the method further includes: receiving, according to a preset periodicity, updated login information sent by the third device; and updating the locally stored login information based on the updated login information.

According to the second aspect or any one of the foregoing implementations of the second aspect, the displaying a QR code associated with the login information includes: in response to a user operation, displaying the QR code associated with the login information; or receiving a login information display indication sent by the first device, and displaying the QR code associated with the login information; or after receiving the login information, automatically displaying the QR code associated with the login information.

For technical effects corresponding to any one of the second aspect or the implementations of the second aspect, refer to technical effect corresponding to any one of the first aspect or the implementations of the first aspect. Details are not described herein again.

According to a third aspect, a device login method is provided, and is applied to a third device. The method includes: forwarding, to a second device, registration information sent by a third device, where the registration information includes a first address of the third device; and scanning a QR code that is displayed on the second device and associated with login information of the third device, to log in to the third device, where the login information is information that is sent by the third device and that is obtained after the second device registers with the third device corresponding to the first address based on the registration information.

According to the third aspect, before the forwarding, to a second device, registration information sent by a third device, the method further includes: sending a device information request to the second device and the third device in response to an operation of a user on a first application; displaying a device list based on a received first device information response sent by the third device and a received second device information response sent by the second device, where the first device information response carries a device type and a device capability of the third device, and the second device information response carries a device type and a device capability of the second device; and determining the third device as a primary home hub and the second device as a secondary home hub in response to an operation of the user on the device list.

According to any one of the third aspect or the foregoing implementations of the third aspect, the method further includes: sending a first setting command to the third device, where the first setting command is used to set the third device as the primary home hub; and receiving the registration information sent by the third device, where the registration information is information generated after the third device receives the first setting command.

According to any one of the third aspect or the foregoing implementations of the third aspect, before the sending a first setting command to the third device, the method further includes: negotiating with the third device about a key for data transmission.

According to any one of the third aspect or the foregoing implementations of the third aspect, the forwarding, to a second device, registration information sent by a third device includes: sending a second setting command to the second device, where the second setting command is used to set the second device as the secondary home hub, and the second setting command carries the registration information.

According to the third aspect or any one of the foregoing implementations of the third aspect, the scanning a QR code that is displayed on the second device and associated with login information of the third device, to log in to the third device includes: scanning the QR code that is displayed on the second device and associated with the login information of the third device, to obtain the first address and a verification code that are included in the login information; and sending the verification code to the third device based on the first address, to log in to the third device.

According to any one of the third aspect or the foregoing implementations of the third aspect, before the forwarding, to a second device, registration information sent by a third device, the method further includes: negotiating with the second device about a key for data transmission.

For technical effects corresponding to any one of the third aspect or the implementations of the third aspect, refer to technical effect corresponding to the first aspect or the implementations of the first aspect. Details are not described herein again.

According to a fourth aspect, a device login system is provided, where the system includes a first device, a second device, and a third device. The first device is configured to forward, to the second device, registration information sent by the third device, where the registration information includes a first address of the third device. The second device is configured to send, based on the registration information, a registration request to the third device corresponding to the first address, where the registration request carries the registration information. The third device is configured to send login information to the second device after obtaining the registration information. The second device is further configured to display a QR code associated with the login information. The first device is further configured to scan the QR code to log in to the third device.

According to the fourth aspect, the first device is further configured to send a device information request to the second device and the third device in response to an operation of a user on a first application. The third device is further configured to send a first device information response to the first device based on the received device information request, where the first device information response carries a device type and a device capability of the third device. The second device is further configured to send a second device information response to the first device based on the received device information request, where the second device information response carries a device type and a device capability of the second device.

According to any one of the fourth aspect or the foregoing implementations of the third aspect, the first device is further configured to display a device list based on the received first device information response sent by the third device and the received second device information response sent by the second device. The first device is further configured to determine the third device as a primary home hub and the second device as a secondary home hub in response to an operation of the user on the device list.

According to any one of the fourth aspect or the foregoing implementations of the third aspect, the first device is further configured to send a first setting command to the third device, where the first setting command is used to set the third device as the primary home hub. The third device is further configured to generate the registration information according to the first setting command. The third device is further configured to send the registration information to the first device.

According to any one of the fourth aspect or the foregoing implementations of the third aspect, the first device is further configured to send a second setting command to the second device, where the second setting command is used to set the second device as the secondary home hub, and the second setting command carries the registration information.

According to any one of the fourth aspect or the foregoing implementations of the third aspect, the login information includes the first address of the third device and a verification code. The first device is specifically configured to send the verification code to the third device based on the first address, to log in to the third device.

According to any one of the fourth aspect or the foregoing implementations of the third aspect, the first device is further configured to negotiate with at least one device of the second device and the third device about a key for data transmission.

For technical effects corresponding to any one of the fourth aspect or the implementations of the fourth aspect, refer to technical effect corresponding to any one of the first aspect or the implementations of the first aspect. Details are not described herein again.

According to a fifth aspect, an electronic device is provided. The electronic device includes a processor and a memory. The memory is coupled to the processor, and the memory is configured to store computer-readable instructions. When the processor reads the computer-readable instructions from the memory, the electronic device performs the following operation: receiving a registration request sent by a second device, where the registration request carries registration information, and the registration information is registration information allocated by a third device; and sending login information to the second device after obtaining the registration information, where the login information indicates the second device to generate a QR code associated with the login information, and the QR code is used to assist a first device in logging in to the third device.

According to the fifth aspect, when the processor reads the computer-readable instructions from the memory, the electronic device is further enabled to perform the following operation: receiving a first setting command sent by the first device, where the first setting command is used to set the third device as a primary home hub; generating the registration information according to the first setting command; and sending the registration information to the first device.

According to any one of the fifth aspect or the foregoing implementations of the fifth aspect, when the processor reads the computer-readable instructions from the memory, the electronic device is further enabled to perform the following operation: negotiating with the first device about a key for data transmission.

According to any one of the fifth aspect or the foregoing implementations of the fifth aspect, when the processor reads the computer-readable instructions from the memory, the electronic device is further enabled to perform the following operation: receiving a device information request sent by the first device; and sending a first device information response to the first device, where the first device information response carries a device type and a device capability of the third device.

According to any one of the fifth aspect or the foregoing implementations of the fifth aspect, when the processor reads the computer-readable instructions from the memory, the electronic device is further enabled to perform the following operation: sending updated login information to the second device according to a preset periodicity.

For technical effects corresponding to any one of the fifth aspect or the implementations of the fifth aspect, refer to technical effect corresponding to any one of the first aspect or the implementations of the first aspect. Details are not described herein again.

According to a sixth aspect, an electronic device is provided. The electronic device includes a processor, a memory, and a display. The memory and the display are coupled to the processor. The memory is configured to store computer-readable instructions. When the processor reads the computer-readable instructions from the memory, the electronic device performs the following operation: receiving registration information sent by a first device, where the registration information includes a first address of a third device; sending, based on the registration information, a registration request to the third device corresponding to the first address, where the registration request carries the registration information; receiving login information sent by the third device; and displaying a QR code associated with the login information, where the QR code is used to assist the first device in logging in to the third device.

According to the sixth aspect, the receiving registration information sent by a first device includes: receiving a second setting command sent by the first device, where the second setting command is used to set a second device as a secondary home hub, and the second setting command carries the registration information.

According to any one of the sixth aspect or the foregoing implementations of the sixth aspect, when the processor reads the computer-readable instructions from the memory, the electronic device is further enabled to perform the following operation: negotiating with the third device about a key for data transmission.

According to any one of the sixth aspect or the foregoing implementations of the sixth aspect, when the processor reads the computer-readable instructions from the memory, the electronic device is further enabled to perform the following operation: receiving a device information request sent by the first device; and sending a second device information response to the first device, where second device information response carries a device type and a device capability of the second device.

According to any one of the sixth aspect or the foregoing implementations of the sixth aspect, when the processor reads the computer-readable instructions from the memory, the electronic device is further enabled to perform the following operation: receiving, according to a preset periodicity, updated login information sent by the third device; and updating the locally stored login information based on the updated login information.

According to the sixth aspect or any one of the foregoing implementations of the sixth aspect, the displaying a QR code associated with the login information includes: in response to a user operation, displaying the QR code associated with the login information; or receiving a login information display indication sent by the first device, and displaying the QR code associated with the login information; or after receiving the login information, automatically displaying the QR code associated with the login information.

For technical effects corresponding to any one of the sixth aspect or the implementations of the sixth aspect, refer to the technical effect corresponding to any one of the second aspect or the implementations of the second aspect. Details are not described herein again.

According to a seventh aspect, an electronic device is provided. The electronic device includes a processor and a memory. The memory is coupled to the processor, and the memory is configured to store computer-readable instructions. When the processor reads the computer-readable instructions from the memory, the electronic device performs the following operation: forwarding, to a second device, registration information sent by a third device, where the registration information includes a first address of the third device; and scanning a QR code that is displayed on the second device and associated with login information of the third device, to log in to the third device, where the login information is information that is sent by the third device and that is obtained after the second device registers with the third device corresponding to the first address based on the registration information.

According to the seventh aspect, when the processor reads the computer-readable instructions from the memory, the electronic device is further enabled to perform the following operation: sending a device information request to the second device and the third device in response to an operation of a user on a first application; displaying a device list based on a received first device information response sent by the third device and a received second device information response sent by the second device, where the first device information response carries a device type and a device capability of the third device, and the second device information response carries a device type and a device capability of the second device; and determining the third device as a primary home hub and the second device as a secondary home hub in response to an operation of the user on the device list.

According to any one of the seventh aspect or the foregoing implementations of the seventh aspect, when the processor reads the computer-readable instructions from the memory, the electronic device is further enabled to perform the following operation: sending a first setting command to the third device, where the first setting command is used to set the third device as the primary home hub; and receiving the registration information sent by the third device, where the registration information is information generated after the third device receives the first setting command.

According to any one of the seventh aspect or the foregoing implementations of the seventh aspect, when the processor reads the computer-readable instructions from the memory, the electronic device is further enabled to perform the following operation: negotiating with the third device about a key for data transmission.

According to any one of the seventh aspect or the foregoing implementations of the seventh aspect, the forwarding, to a second device, registration information sent by a third device includes: sending a second setting command to the second device, where the second setting command is used to set the second device as the secondary home hub, and the second setting command carries the registration information.

According to the seventh aspect or any one of the foregoing implementations of the seventh aspect, the scanning a QR code that is displayed on the second device and associated with login information of the third device, to log in to the third device includes: scanning the QR code that is displayed on the second device and associated with the login information of the third device, to obtain the first address and a verification code that are included in the login information; and sending the verification code to the third device based on the first address, to log in to the third device.

According to any one of the seventh aspect or the foregoing implementations of the seventh aspect, when the processor reads the computer-readable instructions from the memory, the electronic device is further enabled to perform the following operation: negotiating with the second device about a key for data transmission.

For technical effects corresponding to any one of the seventh aspect or the implementations of the seventh aspect, refer to the technical effect corresponding to any one of the third aspect or the implementations of the third aspect. Details are not described herein again.

According to an eighth aspect, an embodiment of this application provides an electronic device. The electronic device has a function of implementing the device login method according to any one of the first aspect and the possible implementations of the first aspect. The function may be implemented by hardware, or may be implemented by hardware executing corresponding software. The hardware or the software includes one or more modules corresponding to the function.

For technical effects corresponding to any one of the eighth aspect or the implementations of the eighth aspect, refer to technical effect corresponding to any one of the first aspect or the implementations of the first aspect. Details are not described herein again.

According to a ninth aspect, an embodiment of this application provides an electronic device. The electronic device has a function of implementing the device login method according to any one of the second aspect and the possible implementations of the second aspect. The function may be implemented by hardware, or may be implemented by hardware executing corresponding software. The hardware or the software includes one or more modules corresponding to the function.

For technical effects corresponding to any one of the ninth aspect or the implementations of the ninth aspect, refer to technical effect corresponding to any one of the second aspect or the implementations of the second aspect. Details are not described herein again.

According to a tenth aspect, an embodiment of this application provides an electronic device. The electronic device has a function of implementing the device login method according to any one of the third aspect and the possible implementations of the third aspect. The function may be implemented by hardware, or may be implemented by hardware executing corresponding software. The hardware or the software includes one or more modules corresponding to the function.

For technical effects corresponding to any one of the tenth aspect or the implementations of the tenth aspect, refer to technical effect corresponding to any one of the third aspect or the implementations of the third aspect. Details are not described herein again.

According to an eleventh aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect; or the electronic device is enabled to perform the method according to any one of the second aspect or the implementations of the second aspect; or the electronic device is enabled to perform the method according to any one of the third aspect or the implementations of the third aspect.

For technical effects corresponding to any one of the eleventh aspect or the implementations of the eleventh aspect, refer to technical effect corresponding to any one of the first aspect or the implementations of the first aspect. Details are not described herein again.

According to a twelfth aspect, an embodiment of this application provides a computer program product. When the computer program product runs on an electronic device, the electronic device performs the method according to any one of the first aspect or the implementations of the first aspect; or the electronic device performs the method according to any one of the second aspect or the implementations of the second aspect; or the electronic device performs the method according to any one of the third aspect or the implementations of the third aspect.

For technical effects corresponding to any one of the twelfth aspect or the implementations of the twelfth aspect, refer to technical effect corresponding to any one of the first aspect or the implementations of the first aspect. Details are not described herein again.

According to a thirteenth aspect, an embodiment of this application provides a circuit system. The circuit system includes a processing circuit, and the processing circuit is configured to perform the method according to any one of the first aspect or the implementations of the first aspect; or the processing circuit is configured to perform the method according to any one of the second aspect or the implementations of the second aspect; or the processing circuit is configured to perform the method according to any one of the third aspect or the implementations of the third aspect.

For technical effects corresponding to any one of the thirteenth aspect or the implementations of the thirteenth aspect, refer to technical effect corresponding to any one of the first aspect or the implementations of the first aspect. Details are not described herein again.

According to a fourteenth aspect, an embodiment of this application provides a chip system, including at least one processor and at least one interface circuit, where the at least one interface circuit is configured to perform a receiving and sending function, and send instructions to the at least one processor, and when the at least one processor executes the instructions, the at least one processor performs the method according to any one of the first aspect or the implementations of the first aspect; or the at least one processor performs the method according to any one of the second aspect or the implementations of the second aspect; or the at least one processor performs the method in any one of the third aspect or the implementations of the third aspect.

For technical effects corresponding to any one of the fourteenth aspect or the implementations of the fourteenth aspect, refer to technical effect corresponding to any one of the first aspect or the implementations of the first aspect. Details are not described herein again.

### BRIEF DESCRIPTION OF DRAWINGS

FIG. 1A is a schematic flowchart 1 of a device login method according to an embodiment of this application;
FIG. 1B is a schematic diagram 1 of a communication system to which a device login method is applied according to an embodiment of this application;
FIG. 2A is a schematic flowchart 2 of a device login method according to an embodiment of this application;
FIG. 2B is a schematic diagram 2 of a communication system to which a device login method is applied according to an embodiment of this application;
FIG. 3 is a schematic diagram 3 of a communication system to which a device login method is applied according to an embodiment of this application;
FIG. 4A is a schematic diagram of a hardware structure of a first device or a second device according to an embodiment of this application;
FIG. 4B is a schematic diagram of a hardware structure of a third device according to an embodiment of this application;
FIG. 5A and FIG. 5B are a schematic flowchart 3 of a device login method according to an embodiment of this application;
FIG. 6(a) to FIG. 6(d) are a schematic diagram 1 of interfaces according to an embodiment of this application;
FIG. 7 is a schematic diagram 2 of interfaces according to an embodiment of this application;
FIG. 8 is a schematic diagram of a code scanning scenario according to an embodiment of this application;
FIG. 9 is a schematic diagram 3 of an interface according to an embodiment of this application;
FIG. 10 is a schematic diagram of a structure of a first device according to an embodiment of this application;
FIG. 11 is a schematic diagram of a structure of a second device according to an embodiment of this application; and
FIG. 12 is a schematic diagram of a structure of a third device according to an embodiment of this application.

### DESCRIPTION OF EMBODIMENTS

The following describes technical solutions in embodiments of this application with reference to accompanying drawings in embodiments of this application. In descriptions of embodiments of this application, terms used in the following embodiments are only intended for a purpose of describing specific embodiments, but are not intended to limit this application. Terms "one", "a", "the", "the foregoing", "this" and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes direct connection and indirect connection, unless otherwise specified. "First" and "second" are only intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some scenarios, in a decoration phase before a device in a smart home system is delivered to a user for use, an installation and maintenance engineer needs to configure and commission the smart home device. This process is a pre-installation process of the smart home system. In the pre-installation process, after logging in to a first application (for example, an AI Installer^{®} application) via an electronic device (for example, a mobile phone), the installation and maintenance engineer logs in to a home hub in the smart home system by using the first application in the electronic device, to complete configuration and commissioning for the smart home device in the smart home system.

The home hub may integrate hub services of smart home services in the smart home system, to manage and control various smart home devices. Optionally, a resident device or a long-term powered device in the smart home system may be set as the home hub. For example, the home hub is a device, for example, a full-house smart host, a full-house smart light host, or a router.

For example, the electronic device used by the installation and maintenance engineer is the mobile phone, and the home hub is the full-house smart host or the full-house smart light host. A process in which the electronic device logs in to the home hub in the pre-installation process is described.

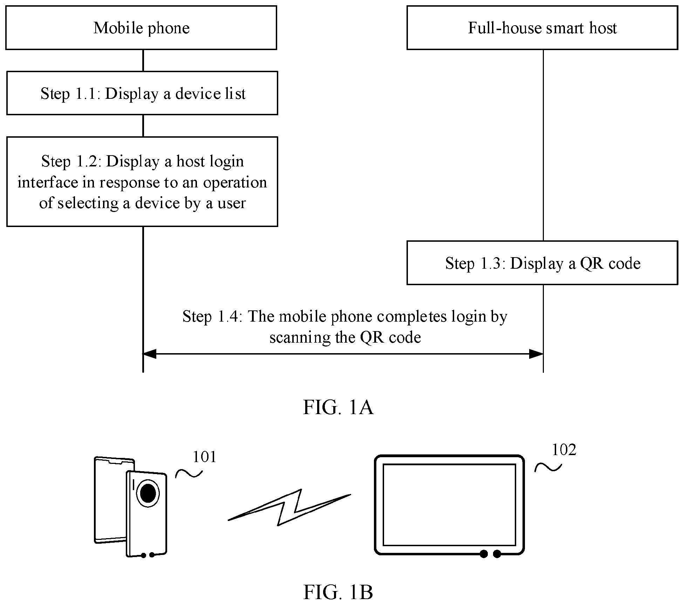

For example, as shown in FIG. 1A, after the mobile phone logs in to the first application, the mobile phone may display a device list, and the installation and maintenance engineer may select a device that supports login from the device list (that is, step 1.1). Then, the mobile phone displays a host login interface in response to an operation of selecting the device by a user (that is, step 1.2), and the user scans a QR code of a host or enters an internet protocol (internet protocol address) of a host on the interface.

In the pre-installation process shown in FIG. 1A, the home hub is the full-house smart host. The full-house smart host is configured with a display, and in response to a user operation, the full-house smart host may display the QR code (that is, step 1.3). Then, the mobile phone may complete this login in response to an operation of scanning, by the user by using the first application, the QR code displayed on the full-house smart host (that is, step 1.4). As shown in FIG. 1B, after a mobile phone 101 successfully logs in to a full-house smart host 102, the mobile phone 101 may establish a communication connection to the full-house smart host 102, and the installation and maintenance engineer may use a first application to complete configuration and commissioning for another smart home device in the smart home system by using the full-house smart host 102.

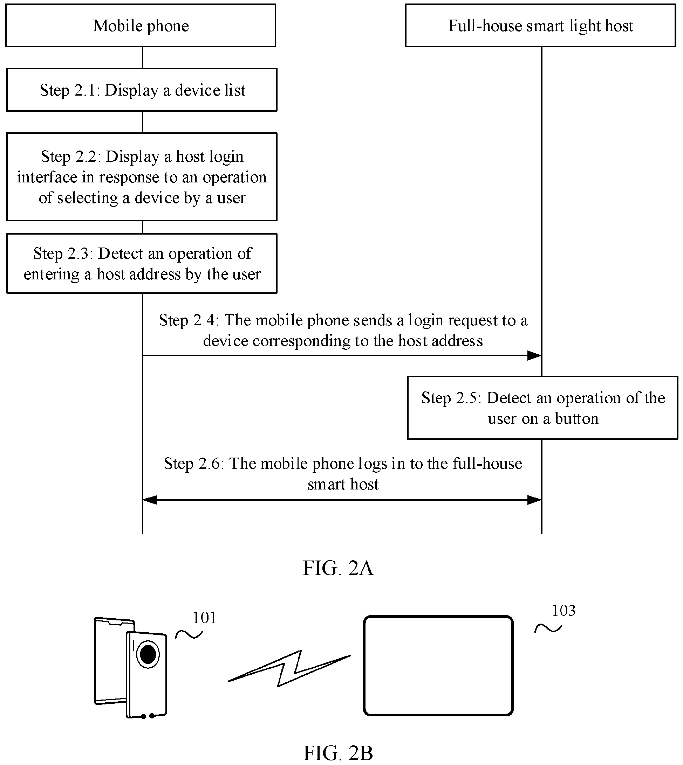

For another example, as shown in FIG. 2A, step 2.1 and step 2.2 are the same as step 1.1 and step 1.2 shown in FIG. 1A. After the mobile phone logs in to a first application, the mobile phone may display a host login interface in response to an operation of selecting a device from a displayed device list by a user. For example, if the home hub is a full-house smart light host, the full-house smart light host is not configured with a display. Therefore, the full-house smart light host is logged in to through button authentication.

Specifically, in a login process, the mobile phone cannot automatically obtain an IP address of a login device. Therefore, the installation and maintenance engineer needs to view the IP address of the login device on a management page of the router. Then, after the mobile phone detects an operation of entering the IP address of the host by the user on the host login interface (that is, step 2.3), the mobile phone sends a login request to a device (for example, the full-house smart light host) corresponding to the IP address of the host (that is, step 2.4). After the full-house smart light host receives the login request and detects an operation of the user on a button (that is, step 2.5), the full-house smart light host allows the mobile phone to log in, to implement login of the mobile phone to the full-house smart light host (that is, step 2.6). As shown in FIG. 2B, after a mobile phone 101 successfully logs in to a full-house smart light host 103, the mobile phone 101 may establish a communication connection to the full-house smart light host 103, and the installation and maintenance engineer may use a first application to complete configuration and commissioning for another smart home device in the smart home system by using the full-house smart light host 103.

With development of terminal technologies, smart home devices can be flexibly combined and sold to meet diversified user requirements. In this case, in a same smart home system, there may be a plurality of devices that support login by using the first application (that is, there are a plurality of devices that can be used as home hubs). As a result, in a process of selecting a device in step 1.2 or step 2.2, the installation and maintenance engineer cannot determine a device to be logged in to.

In addition, in a scenario in which the full-house smart light host (or router) shown in FIG. 2A is used as a home hub, the installation and maintenance engineer needs to separately view and enter the IP address of the host. In addition, to prevent subsequent misoperations, the buttons that can be used for login and configured on the full-house smart light host need to be operated by special tools. Consequently, it is difficult for users to operate such a home hub without a display, and login efficiency is affected.

In addition, for each login, a corresponding operation needs to be completed on a login device (for example, the full-house smart host 102 shown in FIG. 1B or the full-house smart light host 103 shown in FIG. 2B). Therefore, the installation and maintenance engineer needs to determine a position of the login device, and walk to the position to operate the login device. This also affects login efficiency.

Therefore, an embodiment of this application provides a device login method in which an electronic device can log in to a home hub via a device with a display, reducing user operation difficulty and improving user experience.

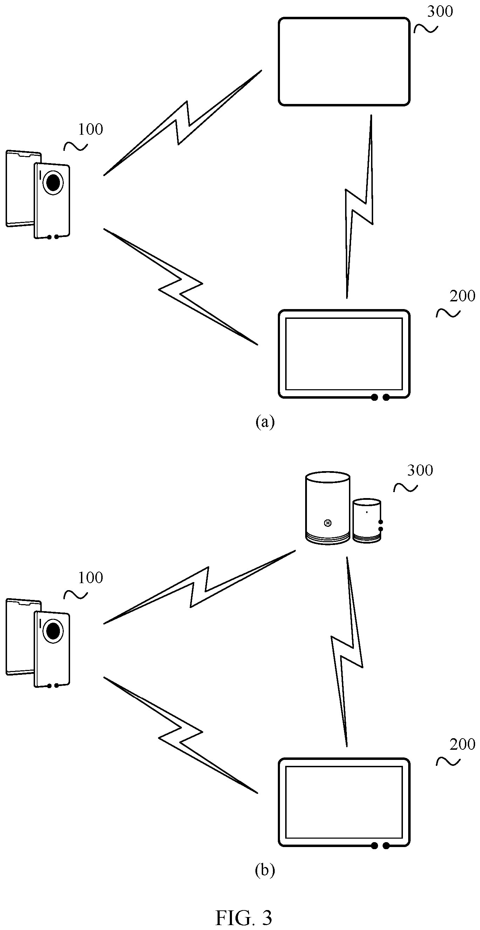

FIG. 3 is a schematic diagram of a communication system to which a device login method is applied according to an embodiment of this application. As shown in (a) in FIG. 3, the communication system includes a first device 100, a second device 200, and a third device 300.

Optionally, the first device 100 is a device that is used by an installation and maintenance engineer and that is to log in to a home hub. For example, the first device 100 may be a terminal device, for example, a mobile phone, a tablet computer, a notebook computer, an ultra-mobile personal computer (ultra-mobile personal computer, UMPC), a netbook, a personal digital assistant (personal digital assistant, PDA), a wearable device, or an artificial intelligence (artificial intelligence, AI) device. An operating system installed on the first device 100 includes but is not limited to iOS', Android^{®}, Harmony', Windows', Linux^{®}, or another operating system. A specific type of the first device 100 and an operating system installed on the first device 100 are not limited in this application.

Optionally, the second device 200 may be, for example, a terminal device such as a smart home device, a mobile phone, a tablet computer, a notebook computer, a netbook, a PDA, a wearable device, or an AI device. The smart home device includes, for example, a smart home control panel, an audio and video device (for example, a large-display device or a sound box), a lighting system device (for example, a table lamp or an electric lamp), an environment control device (for example, an air purifier or a robotic vacuum cleaner), a security protection system device (for example, a camera or an intelligent lock), a kitchen appliance (for example, an oven or a dishwasher), and a smart sensor.

An operating system installed on the second device 200 includes but is not limited to iOS^{®}, Android^{®}, Harmony^{®}, Windows', Linux^{®}, or another operating system. Alternatively, no operating system may be installed on the second device 200. A specific type of the second device 200, whether an operating system is installed, and a type of an operating system when the operating system is installed are not limited in this application.

Optionally, the third device 300 is used as a home hub, and is configured to manage and control a device (for example, the second device 200) in a smart home system. After logging in to the third device 300 by using a first application, the first device 100 may perform device configuration and commissioning processes in a pre-installation process. The third device 300 may be, for example, a full-house smart host, or may be a full-house smart light host shown in (a) in FIG. 3, or may be a smart home device, for example, a router shown in (b) in FIG. 3. A specific type of the third device 300 is not limited in this application.

Optionally, a bandwidth of the third device 300 supports a case in which the third device 300 configures another device in the communication system, and/or the third device 300 is a long-term powered device in the communication system, and/or the third device 300 is a resident device in the communication system.

The first application has functions of configuring and commissioning a smart home device in the pre-installation process. For example, the first application is an AI Installer^{®} application.

In some embodiments, there are one or more second devices 200. The second device 200 includes at least one device configured with a display, and the at least one device with a display is a device that supports login by using the first application, or may be used as a home hub.

Optionally, a bandwidth of the at least one device with a display does not support configuration for the third device 300, the at least one device with a display is not a long-term powered device, and/or the at least one device with a display is not a resident device.

In this case, when both the at least one device with a display and the third device 300 exist in the communication system, the first device 100 may set the third device 300 as a primary home hub, and set the at least one device with a display as a secondary home hub. Alternatively, in response to a primary/secondary service hub division operation of the installation and maintenance engineer, the first device 100 sets the third device 300 as a primary home hub, and sets the at least one device with a display as a secondary home hub. Then, the third device 300 is configured to configure and commission the second device 200 (including the at least one device with a display).

Optionally, in addition to the at least one device with a display that supports login by using the first application, the another second device 200 may be a smart home device that supports login by using the first application, or may be a common smart home device that does not support login by using the first application.

In some embodiments, the first device 100 may establish wireless communication connections to the second device 200 and the third device 300 through a wireless communication technology. The wireless communication technology includes but is not limited to at least one of the following: a wireless local area network (wireless local area network, WLAN) (for example, a wireless fidelity (wireless fidelity, Wi-Fi) network), power line carrier communication (power line communication, PLC), Bluetooth (Bluetooth, BT) (for example, conventional Bluetooth or Bluetooth low energy (Bluetooth low energy, BLE)), near field communication (near field communication, NFC), Zigbee (Zigbee), frequency modulation (frequency modulation, FM), and infrared (infrared, IR).

Optionally, the first device 100, the second device 200, and the third device 300 all support a proximity discovery function. For example, after the first device 100 approaches the second device 200 and the third device 300, the first device 100, the second device 200, and the third device 300 can discover each other, and then establish a wireless communication connection, for example, a Wi-Fi peer-to-peer (peer-to-peer, P2P) connection.

For example, the second device 200 establishes a wireless communication connection to the third device 300 through a local area network. For example, both the second device 200 and the third device 300 are connected to a same router. Subsequently, after the first device 100 accesses the local area network (for example, connected to the router), the first device 100 may discover the second device 200 and the third device 300, and establish wireless communication connections.

In some embodiments, after the first device 100, the second device 200, and the third device 300 access a same local area network, the first device 100 may log in, by using the display of the device with a display that is in the second device 200 and that supports login by using the first application, to the third device 300 by using the first application. Then, the first application in the first device 100 may configure and commission the second device 200 via the third device 300, to complete the pre-installation process of the smart home system.

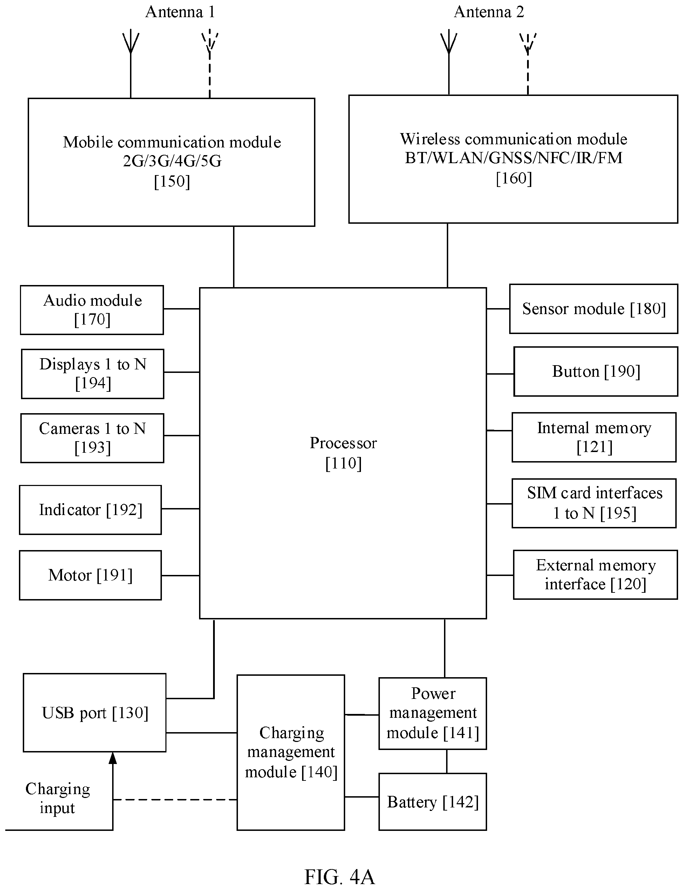

For example, FIG. 4A is a schematic diagram of a structure of a first device 100 or a second device 200.

The first device 100 or the second device 200 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, and a subscriber identity module (subscriber identity module, SIM) card interface 195.

It may be understood that the structure shown in this embodiment of this application does not constitute a specific limitation on the first device 100 or the second device 200. In some other embodiments of this application, the first device 100 or the second device 200 may include more or fewer components than those shown in the figure, or a combination of a part of the components, or splits from a part of the components, or an arrangement of different components. The components shown in the figure may be implemented by hardware, software, or a combination of software and hardware.

For example, the second device 200 is a large-display device, and the second device 200 does not include the mobile communication module 150.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The USB port 130 is a port that conforms to a USB standard specification, and may be specifically a mini USB port, a micro USB port, a USB Type-C port, or the like. The USB port 130 may be configured to connect to a charger to charge the first device 100 or the second device 200, or may be configured to transmit data between the first device 100 or the second device 200 and a peripheral device, or may be configured to be connected to a headset, to play audio through the headset. The port may be configured to connect to another first device, for example, an AR device.

It may be understood that an interface connection relationship between the modules shown in this embodiment of this application is only an example for description, and constitutes no limitation on the structure of the first device 100 or the second device 200. In some other embodiments of this application, the first device 100 or the second device 200 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the first device 100 or the second device 200. The charging management module 140 supplies power to the first device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the first device 100 or the second device 200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first device 100 or the second device 200 may be configured to cover one or more communication frequency bands. Different antennas may be multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution that is applied to the first device 100 or the second device 200 and that includes wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device, or displays an image or a video on a display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the first device 100 or the second device 200, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communications processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the first device 100, the second device 200, and the third device 300 access a same Wi-Fi network by using a wireless communication module, and may discover each other. The first device 100 may display a discovered device by using the display 194, and may determine a primary home hub (for example, the third device 300) and a secondary home hub (for example, the second device 200) in response to a user operation. Therefore, the first device 100 may obtain login information of the primary home hub from the secondary home hub, to log in to the primary home hub.

In some embodiments, the antenna 1 and the mobile communication module 150 in the first device 100 or the second device 200 are coupled, and the antenna 2 and the wireless communication module 160 in the first device 100 or the second device 200 are coupled, so that the first device 100 or the second device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The first device 100 or the second device 200 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be manufactured by using a liquid crystal display (liquid crystal display, LCD), for example, an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the first device 100 or the second device 200 may include one or N displays 194, where N is a positive integer greater than 1.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the first device 100 or the second device 200 may include one or N cameras 193, where N is a positive integer greater than 1.

The external memory interface 120 may be configured to connect to an external memory card, for example, a micro SD card, to extend a storage capability of the first device 100 or the second device 200. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data, and a phone book) created in a process of using the first device 100 or the second device 200, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to execute various function applications of the first device 100 or the second device 200 and data processing.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110. The first device 100 or the second device 200 may use the audio module 170, for example, for music playing or recording. The audio module 170 may include a speaker, a receiver, a microphone, a headset jack, an application processor, and the like to implement an audio function.

The sensor module 180 may include a pressure sensor, a gyro sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like. The touch sensor may be disposed on the display.

The button 190 includes a power button, a volume button, and the like. The button 190 may be a mechanical button, or may be a touch button. The first device 100 or the second device 200 may receive a button input, and generate a button signal input related to user setting and function control of the first device 100 or the second device 200.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effect. The motor 191 may also correspond to different vibration feedback effect for touch operations performed on different areas of the display 194. Different application scenarios (such as a time reminder, information receiving, an alarm clock, and a game) may also correspond to different vibration feedback effect. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the first device 100 or the second device 200. The first device 100 or the second device 200 may support one or N SIM card interfaces, where N is a positive integer greater than 1.

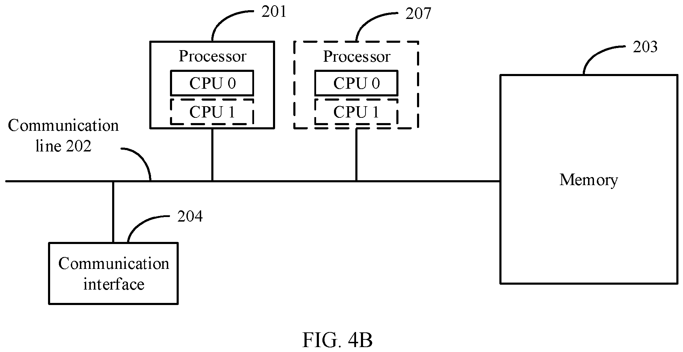

For example, FIG. 4B is a schematic diagram of a structure of a third device 300.

The third device 300 includes at least one processor 201, a communication line 202, a memory 203, and at least one communication interface 204. The memory 203 may alternatively be included in the processor 201.

The processor 201 may be a general-purpose central processing unit (central processing unit, CPU), a microprocessor, an application-specific integrated circuit (application-specific integrated circuit, ASIC), or one or more integrated circuits that are configured to control execution of a program in the solutions in this application.

The communication line 202 may include a path on which information is transferred between the foregoing assemblies.

The communication interface 204 is configured to communicate with another device. In embodiments of this application, the communication interface may be a module, a circuit, a bus, an interface, a transceiver, or another apparatus that can implement a communication function, and is configured to communicate with another device. Optionally, when the communication interface is a transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates functions of sending and receiving information. Specific implementation of the transceiver is not limited in embodiments of this application.

The memory 203 may be a read-only memory (read-only memory, ROM) or another type of static storage device that can store static information and instructions, or a random access memory (random access memory, RAM) or another type of dynamic storage device that can store information and instructions. The memory 203 may alternatively be an electrically erasable programmable read-only memory (electrically erasable programmable read-only memory, EEPROM), a compact disc read-only memory (compact disc read-only memory, CD-ROM) or another compact disc storage, an optical disc storage (which includes a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that is accessible by a computer, but is not limited thereto. The memory may exist independently, and is connected to the processor through the communication line 202. The memory may alternatively be integrated with the processor.

The memory 203 is configured to store computer-executable instructions for implementing the solutions of this application, and the processor 201 controls execution. The processor 201 is configured to execute the computer-executable instructions stored in the memory 203, to implement a device login method provided in the following embodiments of this application.

Optionally, the computer-executable instructions in this embodiment of this application may also be referred to as application program code, instructions, a computer program, or another name. This is not specifically limited in embodiments of this application.

During specific implementation, in an embodiment, the processor 201 may include one or more CPUs such as a CPU 0 and a CPU 1 in FIG. 4B.

During specific implementation, in an embodiment, the third device 300 may include a plurality of processors such as the processor 201 and a processor 207 shown in FIG. 4B. Each of the processors may be a single-core (single-CPU) processor, or may be a multi-core (multi-CPU) processor. The processor herein may be one or more devices, circuits, and/or processing cores configured to process data (for example, computer program instructions).

The third device 300 may be a general-purpose device or a dedicated device. A type of the third device 300 is not limited in embodiments of this application. The structure illustrated in this embodiment of this application does not constitute a specific limitation on the third device 300. In some other embodiments of this application, the third device 300 may include more or fewer components than those shown in the figure, or a combination of a part of the components, or splits from a part of the components, or an arrangement of different components. The components shown in the figure may be implemented by hardware, software, or a combination of software and hardware. For example, when the third device 300 is a full-house smart host, a display is configured.

The following describes the device login method provided in this embodiment of this application by using an example in which the first device 100 is a mobile phone, the second device 200 is a smart home control panel, and the third device 300 is a full-house smart light host.

In some embodiments, in a pre-installation process before a smart home system is delivered to a household for use, a control function and a scenario function of a smart home device in the smart home system need to be set, to complete deployment and installation of a full-house smart home environment. A home hub is configured in the smart home system, and may be connected to the smart home device in the smart home system, to manage and control the smart home control device. The installation and maintenance engineer may log in to the home hub by using the first application, configure and commission the smart home device, and complete the pre-installation process of the smart home system.

It should be noted that, in this embodiment of this application, an example in which the first application is an AI Installer^{®} application is used to describe a device login process. For a login process for another application used in the deployment and installation of the full-house smart environment, refer to the login process of the AI Installer^{®} application.

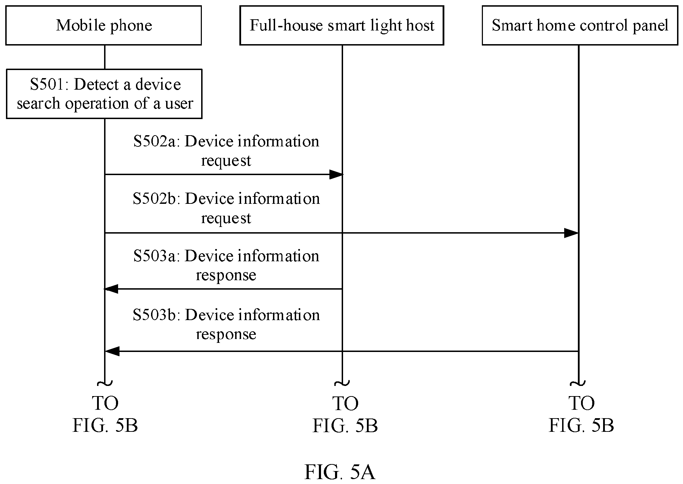

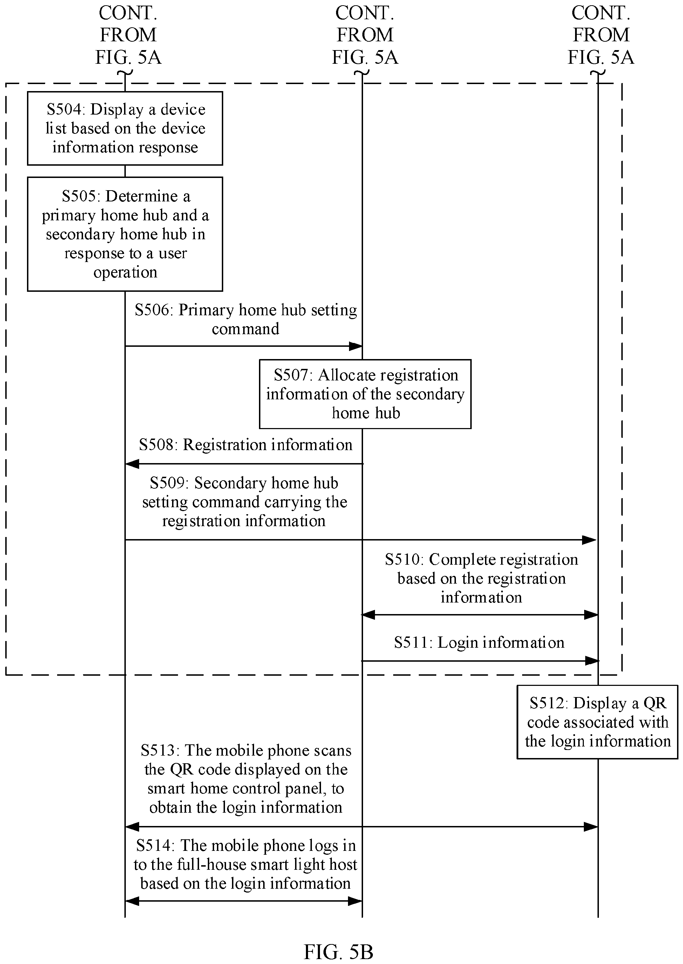

For example, FIG. 5A and FIG. 5B are a schematic flowchart of a device login method according to an embodiment of this application. As shown in FIG. 5A and FIG. 5B, the method includes the following steps.

S501: A mobile phone detects a device search operation of a user.

In some embodiments, after the mobile phone detects an operation of starting a first application by the user, the mobile phone may start the first application. In a process of displaying the first application, the mobile phone may search for a device that supports login by using the first application. The device that supports login by using the first application includes a device that can be used as a home hub to provide a control entrance for a full-house smart home device.

Optionally, based on a requirement for flexibly using a device by the user, a device manufacturer divides a smart home system that originally includes a plurality of smart home devices, and different smart home devices in the plurality of original smart home devices may be freely combined to form a smart home system that meets a use requirement of the user. Therefore, the manufacturer sets that all the plurality of smart home devices support login for the first application. In this way, after the user selects the smart home device, it can be ensured that the formed smart home system includes at least one smart home device that supports login.

In this case, one or more smart home devices that support login may exist in one smart home system. In a process of logging, the mobile phone needs to search for these smart home devices, select one of the smart home devices as a primary home hub in the pre-installation process, and complete configuration and commissioning for the smart home device by using the primary home hub.

In some embodiments, a wireless local area network (wireless local area network, WLAN) (for example, a wireless fidelity (wireless fidelity, Wi-Fi) network) is configured in a home environment. After the mobile phone accesses a Wi-Fi network, the mobile phone may search for a plurality of smart home devices that have accessed the Wi-Fi network and that support login by using the first application.

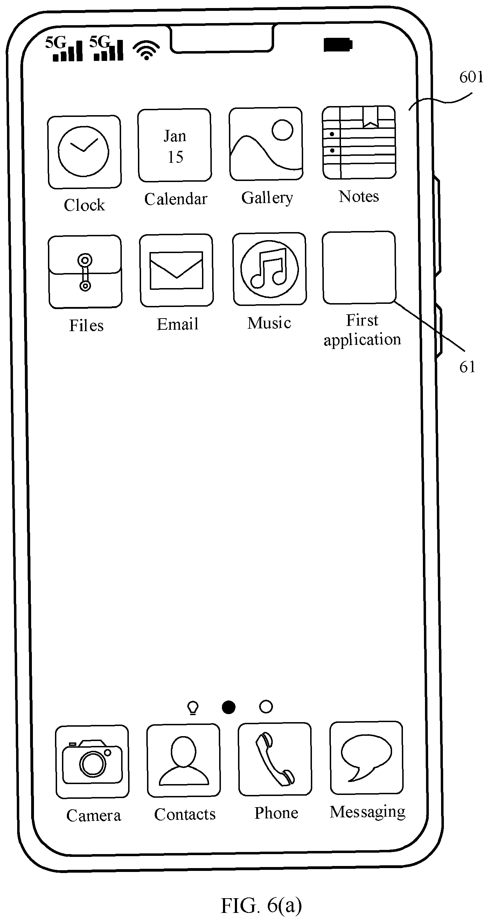

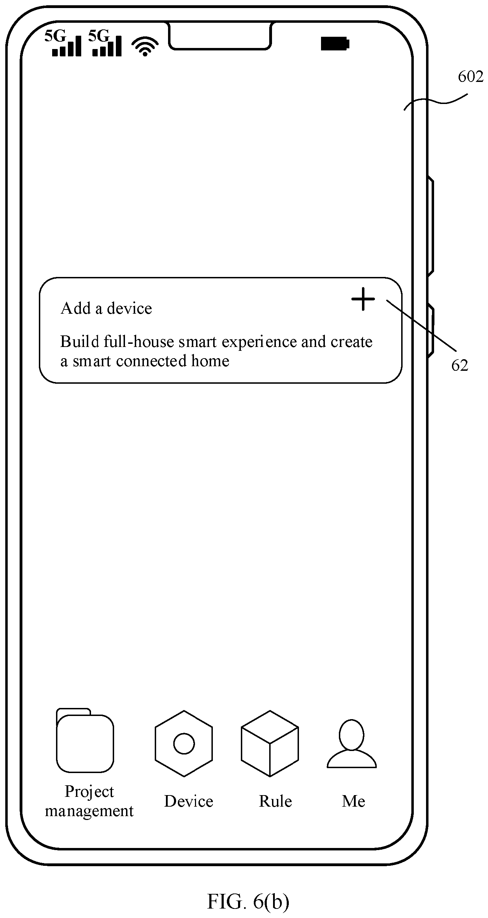

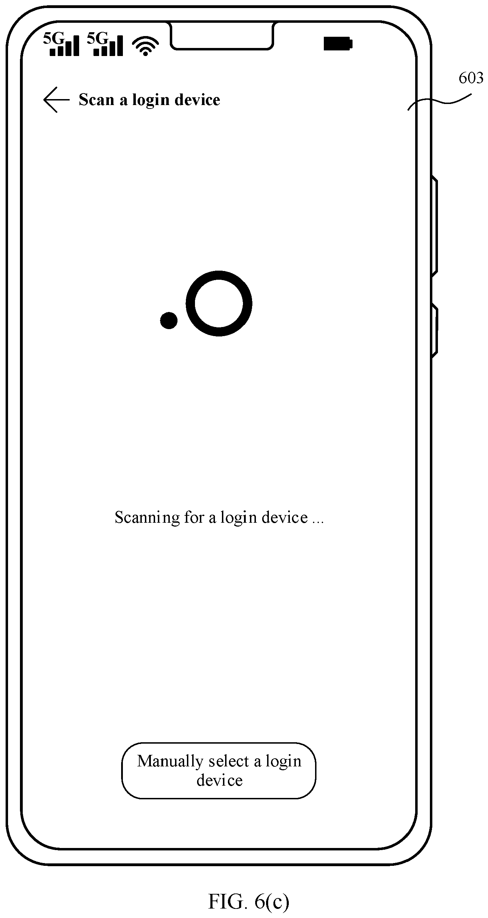

For example, on an interface 601 shown in FIG. 6(a), after the mobile phone detects an operation of tapping a first application icon 61 by the user, the mobile phone determines to start the first application. As shown in FIG. 6(b), after the mobile phone starts the first application, the mobile phone displays a device addition interface 602. After the mobile phone detects an operation of tapping an addition control 62 by the user, the mobile phone starts to search for a device, searches for a device that supports login by using the first application, and displays an interface 603 shown in FIG. 6(c).

It should be noted that, in this embodiment of this application, the user represents a user who performs configuration for the smart home system, for example, an installation and maintenance engineer. This is not described in the following.

S502a: The mobile phone sends a device information request to a full-house smart light host.

S502b: The mobile phone sends a device information request to a smart home control panel.

In some embodiments, in step S502a and step S502b, in a device search process, the mobile phone sends a device information request, to discover a device that supports login by using the first application in a local area network. Optionally, the device information request may be sent in a form of a multicast packet.

For example, the to-be-configured smart home system includes the full-house smart light host and the smart home control panel, and the mobile phone sends the device information request to the full-house smart light host and the smart home control panel.

It should be noted that an execution sequence of step S502a and step S502b is not limited in embodiments of this application.

S503a: The full-house smart light host sends a device information response to the mobile phone.

S503b: The smart home control panel sends a device information response to the mobile phone.

In some embodiments, in step S503a and step S503b, after receiving the device information request, the device (for example, the full-house smart light host or the smart home control panel) that supports login by using the first application may send the device information response to the mobile phone. Optionally, the device information response carries information such as a device name, a device type, and a device capability of the device.

Optionally, the device information request carries an identifier. After receiving the device information request, the device in the smart home system identifies the identifier, and determines that the device that supports login by using the first application feeds back the device information request, that is, sends the device information response to the mobile phone.

Optionally, the mobile phone may also send the device information request to some smart home devices in the smart home system. Optionally, some smart home devices that receive the device information request may also carry device information of these smart home devices in the device information response.

It should be noted that an execution sequence of step S503a and step S503b is not limited in embodiments of this application.

S504: The mobile phone displays a device list based on the device information response.

In some embodiments, after the mobile phone receives the device information response, the mobile phone determines whether the corresponding device is a device that logs in a to-be-configured smart home environment for the first time. Then, the mobile phone displays the device list including a smart home device that logs in the to-be-configured smart home environment for the first time.

For example, in a device configuration process, the mobile phone allocates a corresponding device identity (for example, the primary home hub or a secondary home hub) to the smart home device. A corresponding identifier is set in a device capability of the smart home device, to indicate an allocated device identity. In this case, after the mobile phone receives the device information response, the mobile phone can determine, based on the device capability carried in the device information response, whether the smart home device that sends the device information response is the device that logs in the to-be-configured smart home environment for the first time. If the device capability carried in the device information response does not include the identifier, it indicates that the device is the device that logs in the to-be-configured smart home environment for the first time.

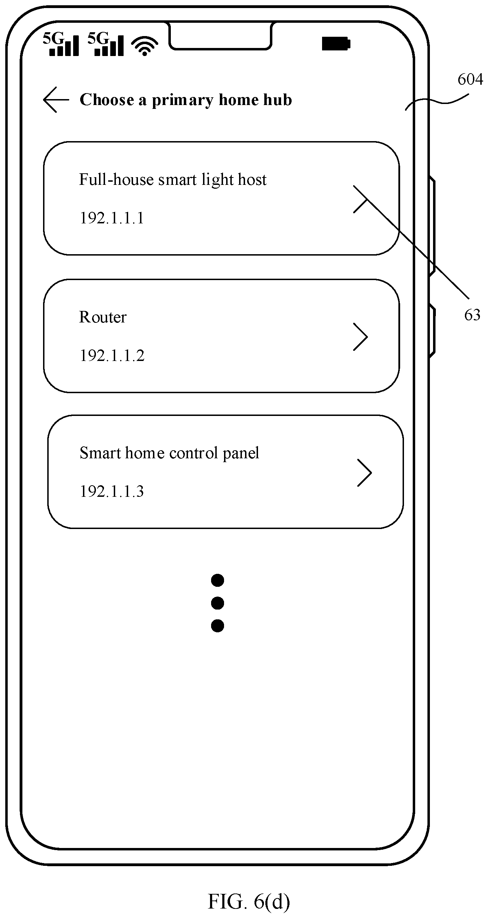

For example, in the interface 603 shown in FIG. 6(c), after the mobile phone determines, in the device search process, devices that log in the to-be-configured smart home environment for the first time, the mobile phone displays these devices on an interface 604 shown in FIG. 6(d).

Optionally, in the device list, the mobile phone may display a device name of a smart home device that logs in the to-be-configured smart home environment for the first time, so that the user can distinguish between different devices.

S505: In response to a user operation, the mobile phone determines the primary home hub and the secondary home hub.

In some embodiments, all the displayed smart home devices may support login for the first application to configure a smart home environment, but different smart home devices have different device capabilities. Therefore, the user may set a smart home device with a strong device capability as the primary home hub, and set another smart home device as the secondary home hub.

For example, based on device capabilities such as a bandwidth, whether a device is a long-term powered device, and whether a device is a resident device, the primary home hub and the secondary home hub are divided. For example, a device with a high bandwidth is divided into the primary home hub, and another device is divided into the secondary home hub. Alternatively, the long-term powered device is divided into the primary home hub, and another device is divided into the secondary home hub. Alternatively, the resident device is divided into the primary home hub, and another device is divided into the secondary home hub.

In some embodiments, the mobile phone may determine the primary home hub and the secondary home hub in response to the user operation.

For example, on the interface 604 shown in FIG. 6(d), the mobile phone detects an operation of tapping a control 63 by the user, and may determine a full-house smart light host corresponding to the control 63 as the primary home hub, and determine another smart home device as the secondary home hub.

In some other embodiments, the mobile phone may automatically divide the primary home hub and the secondary home hub based on a preset primary/secondary home hub division condition and the device information response received in either of step S503a and step S503b. Optionally, after the mobile phone determines the primary home hub, the mobile phone may display prompt information, where the prompt information prompts the user to determine whether to set a device that automatically divides the mobile phone into the primary home hub as a primary home hub. If a determining operation of the user is detected, it is determined that a device that automatically divides the mobile phone as a primary home hub is set as a primary home hub, and division of the primary home hub and the secondary home hub is completed. If a cancellation operation of the user is detected, the interface 604 shown in FIG. 6(d) may be displayed, and a primary home hub and a secondary home hub are divided based on the user operation.

S506: The mobile phone sends a primary home hub setting command to the full-house smart light host.

In some embodiments, the mobile phone performs key negotiation with each smart home device displayed in the device list, to ensure security of subsequent data transmission between devices.

For example, a preset personal identification number (personal identification number, PIN) is configured in the mobile phone and each smart home device, and a key negotiation process is performed by using a preset PIN. For example, the mobile phone and each smart home device perform key negotiation based on a simple password exponential key exchange (simple password exponential key exchange, SPEKE) protocol, to determine a negotiation key for subsequently encrypting transmission data.

In some embodiments, after the mobile phone determines the primary home hub, the mobile phone sends, to the primary home hub (for example, the full-house smart light host), a primary home hub setting command encrypted by using a negotiation key 1, to indicate the primary home hub to determine a device identity of the primary home hub. Optionally, the primary home hub setting command carries secondary home hub information, for example, a quantity of secondary home hubs.

S507: The full-house smart light host allocates registration information from the secondary home hub.

In some embodiments, after the full-house smart light host receives the primary home hub setting command and decrypting the command, the full-house smart light host may determine, based on the primary home hub setting command, that the full-house smart light host is used as the primary home hub, and needs to be used as an entrance to configure another smart home device. Further, the full-house smart light host allocates the registration information to the secondary home hub, where the registration information is used to register the primary home hub.

Optionally, the full-house smart light host may determine the quantity of secondary home hubs based on the secondary home hub information carried in the primary home hub setting command. Then, the full-house smart light host can allocate a corresponding quantity of pieces of registration information to the secondary home hub based on the quantity of secondary home hubs.

S508: The full-house smart light host sends the registration information to the mobile phone.

In some embodiments, the full-house smart light host encrypts the determined registration information by using the negotiation key 1, and then sends the encrypted registration information to the mobile phone. Correspondingly, the mobile phone receives the registration information.

S509: The mobile phone sends, to the smart home control panel, a secondary home hub setting command that carries the registration information.

In some embodiments, after the mobile phone receives the registration information, the mobile phone decrypts the registration information, encrypts the obtained registration information by using a negotiation key 2, and then sends the encrypted registration information to the secondary home hub (for example, the smart home control panel). Optionally, the mobile phone sends the secondary home hub setting command to the secondary home hub, to indicate the secondary home hub to determine a device identity of the secondary home hub, and carry the registration information in the secondary home hub setting command.

In some other embodiments, the mobile phone may also separately send the secondary home hub setting command and the registration information. For example, in step S506, in a process of sending the primary home hub setting command to the full-house smart light host, the mobile phone may also send the secondary home hub setting command to the smart home control panel. Then, after obtaining the registration information, the mobile phone separately forwards the registration information to the smart home control panel.

S510: The smart home control panel completes registration with the full-house smart light host based on the registration information.

In some embodiments, the smart home control panel and the full-house smart light host perform key negotiation based on the preset PIN, to determine a negotiation key 3 used to encrypt communication data. This ensures communication security. For example, the smart home control panel and the full-house smart light host negotiate a key according to the SPEKE protocol.

In some embodiments, after the smart home control panel receives the secondary home hub setting command and decrypts the command, the smart home control panel obtains the registration information carried in the command. Optionally, the registration information includes an IP address of the full-house smart light host. In this case, the smart home control panel may register, based on the registration information and based on the negotiation key 3, with the full-house smart light host corresponding to the IP address. The full-house smart light host determines that registration information used by the currently registered smart home control panel is registration information allocated by the full-house smart light host. In this case, the full-house smart light host may determine that the smart home control panel is a trusted device, and complete registration of the smart home control panel.

S511: The full-house smart light host sends login information to the smart home control panel.

In some embodiments, after registration is completed, the full-house smart light host sends, to the smart home control panel, login information encrypted by using the negotiation key 3, where the login information is used to log in to the full-house smart light host. Optionally, device login information includes a login IP address and a verification code of the device.

S512: The smart home control panel displays a QR code associated with the login information.

In some embodiments, after the smart home control panel receives the login information, the smart home control panel generates, according to a preset algorithm, the QR code associated with the login information.

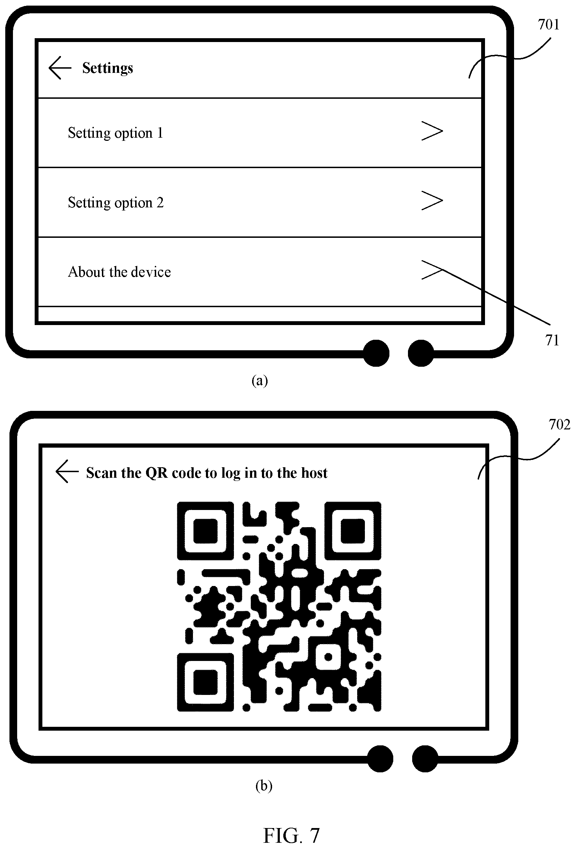

For example, as shown in (a) in FIG. 7, in response to the user operation, the smart home control panel displays a setting interface 701. On the setting interface 701, after the smart home control panel detects an operation of tapping a control 71 by the user, the smart home control panel may display an interface 702 shown in (b) in FIG. 7. On the interface 702, the smart home control panel displays a QR code associated with the login information of the full-house smart light host. Optionally, the smart home control panel may also display a login QR code at a proper occasion without an operation of tapping a control by the user.

In some embodiments, after the smart home control panel receives the login information, the smart home control panel stores the login information. Therefore, when another electronic device needs to log in to the full-house smart light host subsequently, the smart home control panel may generate a corresponding QR code based on the stored login information, to assist the another electronic device in completing login.

S513: The mobile phone scans the QR code displayed on the smart home control panel, to obtain the login information.

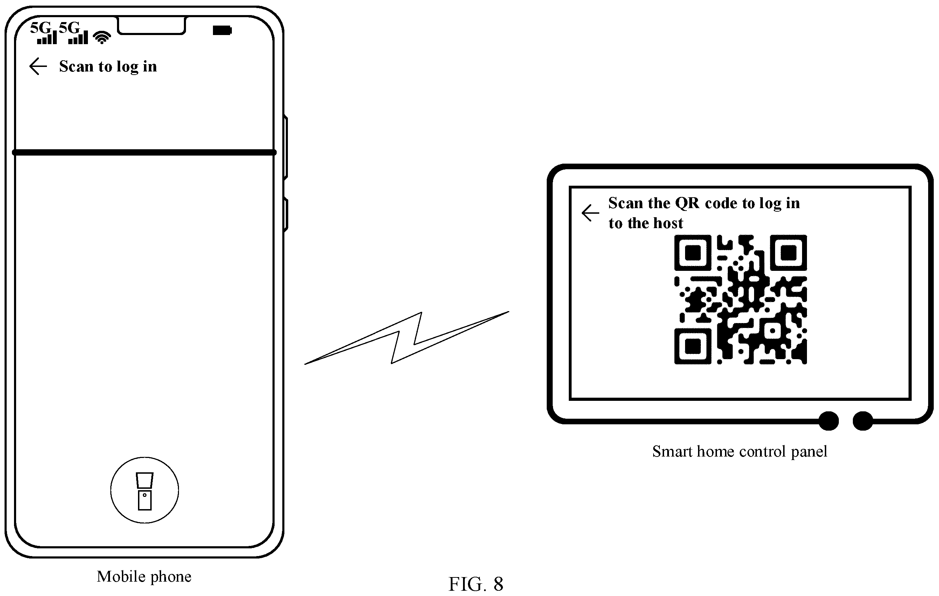

In some embodiments, as shown in FIG. 8, the first application in the mobile phone may scan, by scanning a login interface, the QR code displayed on the smart home control panel, to obtain the login information of the full-house smart light host.

Optionally, the smart home control panel may also generate and display, in another possible form after obtaining the login information sent by the full-house smart light host, information used to complete login.

S514: The mobile phone logs in to the full-house smart light host based on the login information.

In some embodiments, after the mobile phone obtains the login information, the mobile phone determines the IP address and the verification code that are included in the login information. Then, the mobile phone sends, based on the IP address, a verification code encrypted by using the negotiation key 1 to a device (for example, the full-house smart light host) corresponding to the IP address. Correspondingly, the full-house smart light host corresponding to the IP address may receive the verification code sent by the mobile phone, and after decryption, determine that the verification code is the verification code generated by the full-house smart light host. In this case, the full-house smart light host may determine that the mobile phone passes the verification, and may allow the mobile phone to log in. Subsequently, the user may log in to the full-house smart light host by using the first application in the mobile phone, search for another smart home device, and complete configuration and commissioning for a full-house smart home scenario.

In this way, the user does not need to manually enter the IP address and manually operate a host button, and the mobile phone may automatically obtain, by using a device with a display, the IP address of the primary home hub by using the first application, to implement login. This reduces user operation difficulty and improves login efficiency.

In addition, the user logs in to the primary home hub by using the secondary home hub around the user, and does not need to go to a position of the primary home hub. This improves operation convenience.

In addition, the mobile phone may automatically obtain device information of the smart home device, and display a device name of the smart home device, to help the user distinguish a plurality of smart home devices that support login, and facilitate the user operation.

In some embodiments, the method shown in FIG. 5A and FIG. 5B is applicable to a smart home environment configuration scenario in which the device logs in for the first time. In a subsequent process of configuring the smart home environment again, the mobile phone may not need to divide the primary home hub and the secondary home hub, that is, step S504 to step S511 shown in a dashed-line box shown in FIG. 5B do not need to be performed. Instead, after step S503a and step S503b are performed, step S512 is directly performed.

In some other embodiments, if a trust relationship has been established earlier between a device that is determined by the user as the primary home hub and a device that is determined as the secondary home hub, step S508 to step S510 may not be performed, but the primary home hub directly sends the login information to the secondary home hub.

For example, as described in step S504, in a device configuration process, the mobile phone allocates a corresponding device identity (for example, the primary home hub or the secondary home hub) to the smart home device, and an identifier used to indicate the device identity may be set in the device capability of the smart home device. In this case, in step S503a or step S503b, after the mobile phone obtains the device information response, the mobile phone may determine, based on whether the device capability includes the identifier used to indicate the device identity, whether the primary home hub and the secondary home hub have been allocated in the current smart home environment.

If the mobile phone determines that the primary home hub and the secondary home hub have been allocated in the current smart home environment, the mobile phone may directly display device names of all devices that are found by scanning and that support the first application, and identify the primary home hub and the secondary home hub that are included in the device names. Then, the user may operate the secondary home hub to display the QR code (that is, directly perform step S512), and scan the QR code by using the first application in the mobile phone, to log in to the primary home hub. This configures and commissions an original smart home device and/or a newly added smart home device in the smart home environment.

In some embodiments, if the full-house smart light host has determined that the smart home control panel is the trusted device, the full-house smart light host sends the login information to the smart home control panel according to a preset periodicity. Correspondingly, the smart home control panel updates historical login information by using received latest login information.

In this way, the smart home control panel may assist the mobile phone in logging in to the full-house smart light host based on the latest obtained login information. This reduces a risk of abnormal login caused by login information leakage.

In some embodiments, there are one or more secondary home hubs that can display the QR code associated with the login information. Optionally, the plurality of secondary home hubs may obtain the login information of the primary home hub according to the foregoing method. When there are a plurality of secondary home hubs, the user may select a secondary home hub located around the user, or the primary home hub determines, according to a specific election rule, a secondary home hub used to display a QR code associated with the login information. This improves operation convenience. Further, the user may also directly perform a selection operation of the secondary home hub on the mobile phone, to indicate the selected secondary home hub to display a QR code. This further reduces user operation difficulty and improves login efficiency.

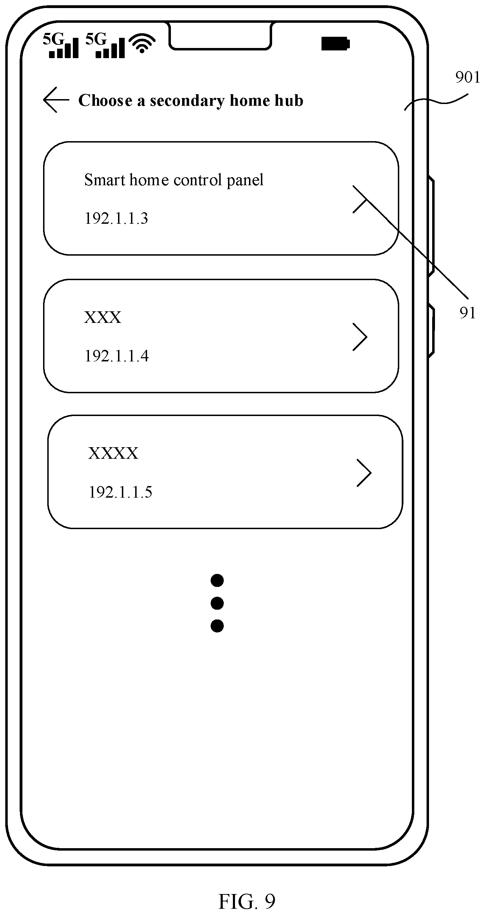

For example, in the interface 604 shown in FIG. 6(d), after the mobile phone determines that the user selects a primary home hub, the mobile phone may display an interface 901 shown in FIG. 9. A selectable secondary home hub is displayed on the interface 901, so that the user can directly select the secondary home hub to be operated. For example, the user selects a smart home control panel located around the user. As shown in the interface 901, after the mobile phone detects an operation of tapping a control 91 by the user, the mobile phone may send a host login information display command to the smart home control panel corresponding to the control 91. Correspondingly, after the smart home control panel receives the host login information display command, the smart home control panel may display the QR code associated with the host login information, so that the mobile phone scans the QR code to complete host login.

In the foregoing embodiments, an example in which a display function is not configured for the primary home hub (for example, the full-house smart light host or the router) is used to describe the device login method provided in embodiments of this application. It should be noted that the device login method provided in this embodiment of this application is also applicable to the primary home hub (for example, the full-house smart host) configured with a display function. In this way, when the primary home hub is not near the user, the user may not need to go to the position of the primary home hub to perform a login operation. This effectively improves login efficiency, increases login flexibility, and improves user experience.

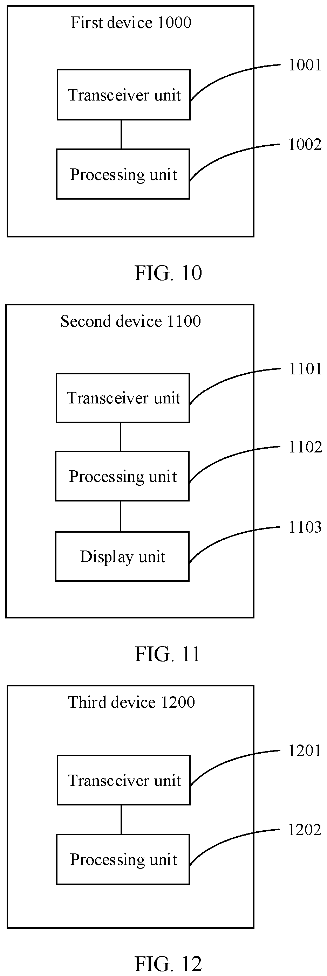

The device login method provided in embodiments of this application is described above in detail with reference to FIG. 5A and FIG. 5B to FIG. 9. The following describes in detail a first device, a second device, and a third device provided in embodiments of this application with reference to FIG. 10 to FIG. 12.

In a possible design, FIG. 10 is a schematic diagram of a structure of a first device according to an embodiment of this application. As shown in FIG. 10, a first device 1000 includes a transceiver unit 1001 and a processing unit 1002. The first device 1000 may be configured to implement functions of the first device 100 or the mobile phone in the foregoing method embodiments.

Optionally, the transceiver unit 1001 is configured to support the first device 1000 in performing S501, S502a, S502b, S503a, S503b, S505, S506, S508, S509, S513, and S514 in FIG. 5A and FIG. 5B.

Optionally, the processing unit 1002 is configured to support the first device 1000 in performing S504 and S505 in FIG. 5B.

The transceiver unit may include a receiving unit and a sending unit, may be implemented by a transceiver or a transceiver-related circuit assembly, and may be a transceiver or a transceiver module. Operations and/or functions of the units in the first device 1000 are separately intended to implement corresponding procedures of the device login method in the foregoing method embodiments. All related content of steps in the foregoing method embodiments may be referenced to function descriptions of corresponding functional units. For brevity, details are not described herein again.

Optionally, the first device 1000 shown in FIG. 10 may further include a storage unit (not shown in FIG. 10), and the storage unit stores a program or instructions. When the transceiver unit 1001 and the processing unit 1002 execute the program or the instructions, the first device 1000 shown in FIG. 10 can perform the device login method in the foregoing method embodiments.

For technical effect of the first device 1000 shown in FIG. 10, refer to the technical effect of the device login method in the foregoing method embodiments. Details are not described herein again.

In addition to a form of the first device 1000, the technical solutions provided in this application may alternatively be a functional unit or a chip in the first device, or an apparatus that can be used together with the first device.

In a possible design, FIG. 11 is a schematic diagram of a structure of a second device according to an embodiment of this application. As shown in FIG. 11, a second device 1100 may include a transceiver unit 1101, a processing unit 1102, and a display unit 1103. The second device 1100 may be configured to implement a function of the second device 200 or the smart home control panel in the foregoing method embodiments.

Optionally, the transceiver unit 1101 is configured to support the second device 1100 in performing S502b, S503b, S509, S510, S511, and S513 in FIG. 5A and FIG. 5B.

Optionally, the processing unit 1102 is configured to support the second device 1100 in performing S510 in FIG. 5B.

Optionally, the display unit 1103 is configured to support the second device 1100 in performing S512 in FIG. 5B.

The transceiver unit may include a receiving unit and a sending unit, may be implemented by a transceiver or a transceiver-related circuit assembly, and may be a transceiver or a transceiver module. Operations and/or functions of the units in the second device 1100 are separately intended to implement corresponding procedures of the device login method in the foregoing method embodiments. All related content of steps in the foregoing method embodiments may be referenced to function descriptions of corresponding functional units. For brevity, details are not described herein again.

Optionally, the second device 1100 shown in FIG. 11 may further include a storage unit (not shown in FIG. 11), and the storage unit stores a program or instructions. When the transceiver unit 1101, the processing unit 1102, and the display unit 1103 execute the program or the instructions, the second device 1100 shown in FIG. 11 may perform the device login method in the foregoing method embodiments.

For technical effect of the second device 1100 shown in FIG. 11, refer to the technical effect of the device login method in the foregoing method embodiments. Details are not described herein again.

In addition to a form of the second device 1100, the technical solutions provided in this application may alternatively be a functional unit or a chip in the second device, or an apparatus that can be used together with the second device.

In a possible design, FIG. 12 is a schematic diagram of a structure of a third device according to an embodiment of this application. As shown in FIG. 12, a third device 1200 includes a transceiver unit 1201 and a processing unit 1202. The third device 1200 may be configured to implement a function of the third device 300 or a full-house smart light host or a router in the foregoing method embodiments.

Optionally, the transceiver unit 1201 is configured to support the third device 1200 in performing S502a, S503a, S506, S508, and S514 in FIG. 5A and FIG. 5B.

Optionally, the processing unit 1202 is configured to support the third device 1200 in performing S507 in FIG. 5B.

The transceiver unit may include a receiving unit and a sending unit, may be implemented by a transceiver or a transceiver-related circuit assembly, and may be a transceiver or a transceiver module. Operations and/or functions of the units in the third device 1200 are separately intended to implement corresponding procedures of the device login method in the foregoing method embodiments. All related content of steps in the foregoing method embodiments may be referenced to function descriptions of corresponding functional units. For brevity, details are not described herein again.

Optionally, the third device 1200 shown in FIG. 12 may further include a storage unit (not shown in FIG. 12), and the storage unit stores a program or instructions. When the transceiver unit 1201 and the processing unit 1202 execute the program or the instructions, the third device 1200 shown in FIG. 12 can perform the device login method in the foregoing method embodiments.

For technical effect of the third device 1200 shown in FIG. 12, refer to the technical effect of the device login method in the foregoing method embodiments. Details are not described herein again.

In addition to a form of the third device 1200, the technical solutions provided in this application may also be a functional unit or a chip in the third device, or an apparatus that can be used together with the third device.

An embodiment of this application further provides a device login system, including the first device 1000 shown in FIG. 10, the second device 1100 shown in FIG. 11, and the third device 1200 shown in FIG. 12.

Optionally, each device in the device login system provided in this embodiment of this application may perform the device login method in the foregoing method embodiments. For technical effect of the device login system, refer to the technical effect of the device login method in the foregoing method embodiments. Details are not described herein again.

An embodiment of this application further provides a chip system. The chip system includes a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the device login method in the foregoing embodiments.

An embodiment of this application further provides a computer program product. When the computer program product runs on a computer, the computer is enabled to perform the foregoing related steps to implement the device login method in the foregoing embodiments.

In addition, an embodiment of this application further provides an apparatus. The apparatus may be specifically an assembly or a module, and the apparatus may include one or more processors and memories that are connected to each other. The memory is configured to store a computer program. When the computer program is executed by one or more processors, the apparatus is enabled to perform the device login method in the foregoing method embodiments.

The apparatus, the computer-readable storage medium, the computer program product, or the chip provided in embodiments of this application are all configured to perform the corresponding method provided above. Therefore, for beneficial effect that can be achieved, refer to beneficial effect in the corresponding method provided above, and details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read only memory (erasable programmable ROM, EPROM), an electrically erasable programmable read only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the descriptions of the foregoing implementations, a person skilled in the art may clearly understand that, for ease and brevity of description, division of the foregoing functional modules is only used as an example for description. In actual application, the foregoing functions may be allocated to different functional modules for implementation based on a requirement, that is, an internal structure of the apparatus is divided into different functional modules, to complete all or a part of the functions described above. For a detailed working process of the foregoing system, apparatus, and unit, refer to a corresponding process in the foregoing method embodiments, and details are not described herein again.

In the several embodiments provided in this application, it should be understood that the disclosed apparatuses and methods may be implemented in other manners. The described apparatus embodiment is only an example. For example, division into the modules or units is only logical function division and may be other division in an actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device login system, wherein the system comprises a first device, a second device, and a third device, wherein
the first device is configured to forward, to the second device, registration information sent by the third device, wherein the registration information comprises a first address of the third device;
the second device is configured to send, based on the registration information, a registration request to the third device corresponding to the first address, wherein the registration request carries the registration information;
the third device is configured to send login information to the second device after obtaining the registration information;
the second device is further configured to display a QR code associated with the login information; and
the first device is further configured to scan the QR code to log in to the third device.

2. The system according to claim 1, wherein
the first device is further configured to send a device information request to the second device and the third device in response to an operation of a user on a first application;
the third device is further configured to send a first device information response to the first device based on the received device information request, wherein the first device information response carries a device type and a device capability of the third device; and
the second device is further configured to send a second device information response to the first device based on the received device information request, wherein the second device information response carries a device type and a device capability of the second device.

3. The system according to claim 2, wherein
the first device is further configured to display a device list based on the received first device information response sent by the third device and the received second device information response sent by the second device; and
the first device is further configured to determine the third device as a primary home hub and the second device as a secondary home hub in response to an operation of the user on the device list.

4. The system according to any one of claims 1 to 3, wherein
the first device is further configured to send a first setting command to the third device, wherein the first setting command is used to set the third device as the primary home hub;
the third device is further configured to generate the registration information according to the first setting command; and
the third device is further configured to send the registration information to the first device.

5. The system according to any one of claims 1 to 4, wherein
the first device is further configured to send a second setting command to the second device, wherein the second setting command is used to set the second device as the secondary home hub, and the second setting command carries the registration information.

6. The system according to any one of claims 1 to 5, wherein the login information comprises the first address of the third device and a verification code; and
the first device is specifically configured to send the verification code to the third device based on the first address, to log in to the third device.

7. The system according to any one of claims 1 to 6, wherein
the first device is further configured to negotiate with at least one of the second device and the third device about a key for data transmission.

8. A device login method, applied to a third device, wherein the method comprises:
receiving a registration request sent by a second device, wherein the registration request carries registration information, and the registration information is registration information allocated by the third device; and
sending login information to the second device after obtaining the registration information, wherein the login information indicates the second device to generate a QR code associated with the login information, and the QR code is used to assist a first device in logging in to the third device.

9. The method according to claim 8, wherein before the receiving a registration request sent by a second device, the method further comprises:
receiving a first setting command sent by the first device, wherein the first setting command is used to set the third device as a primary home hub;
generating the registration information according to the first setting command; and
sending the registration information to the first device.

10. The method according to claim 9, wherein before the receiving a first setting command sent by the first device, the method further comprises:
negotiating with the first device about a key for data transmission.

11. The method according to any one of claims 8 to 10, wherein before the receiving a registration request sent by a second device, the method further comprises:
receiving a device information request sent by the first device; and
sending a first device information response to the first device, wherein the first device information response carries a device type and a device capability of the third device.

12. The method according to any one of claims 8 to 11, wherein the method further comprises:
sending updated login information to the second device according to a preset periodicity.

13. A device login method, applied to a second device, wherein the method comprises:
receiving registration information sent by a first device, wherein the registration information comprises a first address of a third device;
sending, based on the registration information, a registration request to the third device corresponding to the first address, wherein the registration request carries the registration information;
receiving login information sent by the third device; and
displaying a QR code associated with the login information, wherein the QR code is used to assist the first device in logging in to the third device.

14. The method according to claim 13, wherein the receiving registration information sent by a first device comprises:
receiving a second setting command sent by the first device, wherein the second setting command is used to set the second device as a secondary home hub, and the second setting command carries the registration information.

15. The method according to claim 13 or 14, wherein before the sending, based on the registration information, a registration request to the third device corresponding to the first address, the method further comprises:
negotiating with the third device about a key for data transmission.

16. The method according to any one of claims 13 to 15, wherein before the receiving registration information sent by a first device, the method further comprises:
receiving a device information request sent by the first device; and
sending a second device information response to the first device, wherein the second device information response carries a device type and a device capability of the second device.

17. The method according to any one of claims 13 to 16, wherein the method further comprises:
receiving, according to a preset periodicity, updated login information sent by the third device; and
updating the locally stored login information based on the updated login information.

18. The method according to any one of claims 13 to 17, wherein the displaying a QR code associated with the login information comprises:
in response to a user operation, displaying the QR code associated with the login information; or
receiving a login information display indication sent by the first device, and displaying the QR code associated with the login information; or
after receiving the login information, automatically displaying the QR code associated with the login information.

19. A device login method, applied to a first device, wherein the method comprises:
forwarding, to a second device, registration information sent by a third device, wherein the registration information comprises a first address of the third device; and
scanning a QR code that is displayed on the second device and associated with login information of the third device, to log in to the third device, wherein the login information is information that is sent by the third device and that is obtained after the second device registers with the third device corresponding to the first address based on the registration information.

20. The method according to claim 19, wherein before the forwarding, to a second device, registration information sent by a third device, the method further comprises:
sending a device information request to the second device and the third device in response to an operation of a user on a first application;
displaying a device list based on a received first device information response sent by the third device and a received second device information response sent by the second device, wherein the first device information response carries a device type and a device capability of the third device, and the second device information response carries a device type and a device capability of the second device; and
determining the third device as a primary home hub and the second device as a secondary home hub in response to an operation of the user on the device list.

21. The method according to claim 19 or 20, wherein the method further comprises:
sending a first setting command to the third device, wherein the first setting command is used to set the third device as the primary home hub; and
receiving the registration information sent by the third device, wherein the registration information is information generated after the third device receives the first setting command.

22. The method according to any one of claims 19 to 21, wherein before the sending a first setting command to the third device, the method further comprises:
negotiating with the third device about a key for data transmission.

23. The method according to any one of claims 19 to 22, wherein the forwarding, to a second device, registration information sent by a third device comprises:
sending a second setting command to the second device, wherein the second setting command is used to set the second device as the secondary home hub, and the second setting command carries the registration information.

24. The method according to any one of claims 19 to 23, wherein the scanning a QR code that is displayed on the second device and associated with login information of the third device, to log in to the third device comprises:
scanning the QR code that is displayed on the second device and associated with the login information of the third device, to obtain the first address and a verification code that are comprised in the login information; and
sending the verification code to the third device based on the first address, to log in to the third device.

25. The method according to any one of claims 19 to 24, wherein before the forwarding, to a second device, registration information sent by a third device, the method further comprises:
negotiating with the second device about a key for data transmission.

26. An electronic device, comprising a processor and a memory, wherein the memory is coupled to the processor, the memory is configured to store computer-readable instructions, and when the processor reads the computer-readable instructions from the memory, the electronic device is enabled to perform the method according to any one of claims 8 to 12.

27. An electronic device, comprising a processor, a memory, and a display, wherein the memory and the display are coupled to the processor, the memory is configured to store computer-readable instructions, and when the processor reads the computer-readable instructions from the memory, the electronic device is enabled to perform the method according to any one of claims 13 to 18.

28. An electronic device, comprising a processor and a memory, wherein the memory is coupled to the processor, the memory is configured to store computer-readable instructions, and when the processor reads the computer-readable instructions from the memory, the electronic device is enabled to perform the method according to any one of claims 19 to 25.

29. A computer-readable storage medium, wherein the computer-readable storage medium comprises a computer program, and when the computer program is run on an electronic device, the electronic device is enabled to perform the method according to any one of claims 8 to 12, the method according to any one of claims 13 to 18, or the method according to any one of claims 19 to 25.

30. A computer program product, wherein when the computer program product runs on a computer, the computer is enabled to perform the method according to any one of claims 8 to 12, the method according to any one of claims 13 to 18, or the method according to any one of claims 19 to 25.
